# EUROPÄISCHE PATENTANMELDUNG

(11) **EP 2 535 585 A1**
(43) Veröffentlichungstag der Anmeldung: **19.12.2012**
(21) Anmeldenummer: 12170701.2
(22) Anmeldetag: 04.06.2012
(51) Int. Cl.: F04B 15/08, F04B 17/04, F04B 19/00, F04B 53/08, F02M 21/06, F17C 5/00

(54) **Pumpe zum Fördern eines kryogenen Fluids**

(30) Priorität: 18.06.2011 DE 102011104546
(71) Anmelder: Magna Steyr Fahrzeugtechnik AG & Co KG, 8041 Graz (AT)
(72) Erfinder: Brunnhofer, Klaus, 8044 Graz (AT); Peschka, Walter, 71034 Böblingen (DE)
(74) Vertreter: Rausch, Gabriele

(57) **Zusammenfassung**

Die Erfindung betrifft eine Pumpe zum Fördern eines kryogenen Fluids, wie etwa kryogenem Wasserstoff, von einem Tank in einen unter einem höheren Druck stehenden Behälter, umfassend einen Zylinder mit einem darin angeordneten Kolben, welcher im Zylinder hin und her verlaufende Hubbewegungen ausführen kann, wobei das Volumen einer Niedertemperaturkammer bei einer in einer Hubrichtung verlaufenden ersten Hubbewegung des Kolbens abnimmt und das Volumen einer Hochtemperaturkammer, die auf der zur Niedertemperaturkammer gegenüberliegenden Seite des Kolbens im Zylinder liegt, entsprechend zunimmt. Die Pumpe umfasst ferner einen in die Niedertemperaturkammer mündenden Fluideinlass, an den der Tank angeschlossen oder anschließbar ist, einen aus der Hochtemperaturkammer führenden Fluidauslass, an den der Behälter angeschlossen oder anschließbar ist, und eine Fluidverbindung, über die die beiden Kammern miteinander verbunden sind, wobei zumindest eine Heizeinrichtung dazu ausgebildet ist, das während der ersten Hubbewegung aus der Niedertemperaturkammer in die Hochtemperaturkammer strömende Fluid derart zu erwärmen, dass sich in der Hochtemperaturkammer ein Druck einstellt, welcher den Behälterdruck übersteigt.

## Beschreibung

Die Erfindung betrifft eine Pumpe zum Fördern eines kryogenen Fluids, insbesondere kryogenem Wasserstoff, von einem Tank in einen unter einem höheren Druck stehenden Behälter. Die Pumpe umfasst einen Zylinder mit einem darin angeordneten Kolben, welcher im Zylinder hin und her verlaufende Hubbewegungen ausführen kann, wobei das Volumen einer Niedertemperaturkammer des Zylinders bei einer in einer Hubrichtung verlaufenden ersten Hubbewegung des Kolbens abnimmt und das Volumen einer Hochtemperaturkammer, die auf der zur Niedertemperaturkammer gegenüberliegenden Seite des Kolbens im Zylinder liegt, entsprechend zunimmt, wobei umgekehrt bei einer in der entgegengesetzten Hubrichtung verlaufenden zweiten Hubbewegung des Kolbens das Volumen der Hochtemperaturkammer abnimmt und das Volumen der Niedertemperaturkammer entsprechend zunimmt. Die Pumpe umfasst ferner einen in die Niedertemperaturkammer mündenden Fluideinlass, an den der Tank angeschlossen oder anschließbar ist, einen aus der Hochtemperaturkammer führenden Fluidauslass, an den der Behälter angeschlossen oder anschließbar ist, und eine Fluidverbindung, über die die beiden Kammern miteinander verbunden sind.

Bei herkömmlichen derartigen kryogenen Pumpen besteht ein Problem darin, dass diese nur relativ geringe wartungsfreie Betriebsperioden besitzen. Dies gilt insbesondere für herkömmliche kryogene Kolbenpumpen mit kleinen geometrischen Dimensionen (z.B. Kolbendurchmesser kleiner als etwa 20 mm). Für derartige Pumpen wird vor allem im Hinblick auf Anwendungen im Kraftfahrzeug ein wesentlich reduzierter Wartungsaufwand einschließlich einer erheblichen Vergrößerung der wartungsfreien Betriebsperioden angestrebt.

Der vorliegenden Erfindung liegt die Aufgabe zugrunde, eine verbesserte Pumpe anzugeben, die sich insbesondere auch für den Einsatz in Kraftfahrzeugen eignet.

Die Aufgabe wird durch eine Pumpe gemäß Anspruch 1 gelöst und insbesondere dadurch, dass zumindest eine Heizeinrichtung dazu ausgebildet ist, das während der ersten Hubbewegung aus der Niedertemperaturkammer durch die Fluidverbindung in die Hochtemperaturkammer strömende Fluid derart zu erwärmen, dass sich in der Hochtemperaturkammer ein, insbesondere isochor, mit der Temperatur ansteigender Druck einstellt, welcher den Behälterdruck übersteigt.

Bei der erfindungsgemäßen Pumpe bleibt aufgrund der Anordnung des Kolbens zwischen den beiden Kammern das für das Fluid verfügbare Volumen während der hin und her verlaufenden Hubbewegungen des Kolbens konstant. Aus der zumindest näherungsweise anwendbaren Zustandsgleichung für ideale Gase P*V/T = Konstant, wobei P der Druck ist, V das Volumen ist und T die Temperatur ist, ergibt sich daher bei konstantem Volumen (V = Konstant) ein proportionaler Zusammenhang zwischen dem Druck P und der Temperatur T. Derartige Zustandsänderungen werden als isochore Zustandsänderungen bezeichnet.

Bei der erfindungsgemäßen Pumpe bewirkt die Heizeinrichtung eine im Wesentlichen isochore Zustandsänderung des Fluids. Insbesondere wird das in die Hochtemperaturkammer strömende Fluid derart stark erwärmt, dass der Druck des Fluids den Behälterdruck übersteigt, so dass das Fluid solange über den Fluidauslass aus der Hochtemperaturkammer in den Behälter strömen kann, bis sich ein Gleichgewicht zwischen dem Druck in der Hochtemperaturkammer und dem Behälterdruck eingestellt hat.

Im Ergebnis bewirkt daher die Heizeinrichtung nicht nur eine Erwärmung des in die Hochtemperaturkammer geförderten Fluids, sondern auch eine Druckerhöhung, so dass zumindest ein Teil des Fluids in den Behälter strömen kann. Bei der erfindungsgemäßen Pumpe ist es daher möglich, Fluid unter Verwendung einer Heizeinrichtung in einen unter einem höheren Druck stehenden Behälter zu pumpen.

Da die Heizeinrichtung relativ robust und auch kompakt ausgebildet werden kann, lässt sich insgesamt eine zuverlässige und klein bauende Pumpe realisieren. Durch die kompakte Bauform benötigt die Pumpe nicht nur einen geringen Stauraum, zum Beispiel in einem Kraftfahrzeug, sondern ermöglicht es auch, dass die erfindungsgemäße Pumpe relativ einfach gegenüber der Umgebung wärmeisoliert werden kann. Außerdem bedürfen weder die Kolben-Zylinder-Anordnung noch die Heizeinrichtung eines großen Wartungsaufwands, so dass bei der Pumpe auch relativ lange wartungsfreie Betriebsperioden erreicht werden können, bspw. mehr als zweitausend wartungsfreie Betriebsstunden.

Mit dem Begriff "kyrogenes Fluid" bzw. "Fluid" wird auf ein Medium abgestellt, das eine extrem tiefe Temperatur aufweist, welche insbesondere in der Nähe des Siedepunkts des Mediums liegt. Beispielsweise kann es sich bei dem kryogenen Fluid um kryogenen Wasserstoff handeln, dessen Siedepunkt bei etwa 20 K liegt. Außerdem kann das kryogene Fluid in der Pumpe, im Tank oder im Behälter in flüssiger Phase und/oder in gasförmiger Phase vorliegen.

Vorteilhafte Weiterbildungen der Erfindung sind in den abhängigen Ansprüchen angegeben.

Nach einer bevorzugten Weiterbildung der Erfindung ist zumindest eine Kühleinrichtung dazu ausgebildet, das in der Hochtemperaturkammer verbliebene, nicht über den Fluidauslass abgeströmte Fluid, welches während der zweiten Hubbewegung aus der Hochtemperaturkammer über die Fluidverbindung zurück in die Niedertemperaturkammer strömt, derart zu kühlen, dass sich in der Niedertemperaturkammer ein, insbesondere isochor, mit der Temperatur abnehmender Druck einstellt, der niedriger ist als der Tankdruck.

Bei der zweiten Hubbewegung des Kolbens wird also das in der Hochtemperaturkammer verbliebene Fluid über die Fluidverbindung unter Abkühlung und gleichzeitiger, im Wesentlichen isochorer, Druckerniedrigung wieder zurück in die Niedertemperaturkammer gefördert. Aufgrund des sich in der Niedertemperaturkammer einstellenden niedrigeren Drucks kann dann solange Fluid aus dem Tank über den Fluideinlass in die Niedertemperaturkammer strömen, bis der Druck in der Niedertemperaturkammer den Tankdruck erreicht hat. Anschließend kann wieder die vorstehend beschriebene erste Hubbewegung des Kolbens erfolgen, wodurch das Fluid in die Hochtemperaturkammer und weiter in den Behälter gepumpt wird.

Durch die Anordnung der Kühleinrichtung wird es daher möglich, das in der Hochtemperaturkammer verbliebene Fluid unter Temperatur- und Druckerniedrigung wieder in die Niedertemperaturkammer zu fördern, um das Nachströmen von weiterem Fluid aus dem Tank in die Niedertemperaturkammer zu ermöglichen. Die Kühleinrichtung kann dabei wiederum besonders robust und kompakt ausgebildet sein, so dass insgesamt eine kompakte und robuste, wartungsfreundliche Pumpe realisiert werden kann.

Bevorzugt ist die Fluidverbindung durch die zumindest eine Heizeinrichtung und/oder die zumindest eine Kühleinrichtung geführt, so dass die Heizeinrichtung und/oder die Kühleinrichtung einen Teil der Fluidverbindung bilden. Dadurch kann besonders einfach eine gezielte Erwärmung und/oder eine gezielte Kühlung des kryogenen Fluids erreicht werden. Außerdem kann dadurch die Pumpe besonders kompakt ausgebildet werden.

Die zumindest eine Heizeinrichtung kann einen Wärmetauscher aufweisen, durch den die Fluidverbindung geführt ist. Da es sich bei Wärmetauschern um sehr robuste Bauteile handelt, lässt sich durch den Einsatz eines Wärmetauschers wiederum die wartungsfreie Betriebsperiode der Pumpe erhöhen.

Dabei bildet vorzugsweise ein Primärzweig des Wärmetauschers einen Teil der Fluidverbindung. Bei dem Primärzweig handelt es sich um eine Leitung für das Fluid, die durch den Wärmetauscher verläuft. Auf das durch den Primärzweig strömende Fluid kann Wärme übertragen werden, bspw. von einer insbesondere elektrischen Heizeinrichtung des Wärmetauschers oder von einem in einem Sekundärzweig des Wärmetauschers strömenden Medium. Dabei handelt es sich beim Sekundarzweig um eine vom Primärzweig getrennte Fluidleitung, die bspw. im Gegenstrom, im Gleichstrom, im Kreuzstrom oder im Kreuzgegenstrom relativ zum Primärzweig angeordnet sein kann.

Bevorzugt weist die Heizeinrichtung einen Regenerator auf, durch den die Fluidverbindung geführt ist, wobei der Regenerator auch als Kühleinrichtung für das aus der Hochtemperaturkammer während der zweiten Hubbewegung über die Fluidverbindung zurück in die Niedertemperaturkammer strömende Fluid vorgesehen ist.

Der Regenerator kann als ein Wärmeüberträger angesehen werden, der gleichzeitig als Wärme- bzw. Kältespeicher funktioniert. Durchströmt das von der Niedertemperaturkammer zur Hochtemperaturkammer strömende Fluid den Regenerator, so wird das Fluid bspw. unter Abkühlung einer im Regenerator angeordneten Speichermasse erwärmt. Strömt das in der Hochtemperaturkammer verbliebene wärmere Fluid wieder zurück in die Niedertemperaturkammer, so wird es wiederum unter Erwärmung der Speichermasse abgekühlt. Insgesamt bildet der Regenerator daher eine Komponente der erfindungsgemäßen Pumpe, die sowohl als Kühl- als auch als Heizeinrichtung dient, so dass sich eine Pumpe mit besonders kompakter Bauform realisieren lässt. Außerdem ist der Regenerator im Wesentlichen wartungsfrei, so dass auch eine besonders robuste Pumpe mit geringem Wartungsbedarf realisiert werden kann.

Besonders bevorzugt sind der Regenerator und der Wärmetauscher seriell entlang der Fluidverbindung angeordnet. Dadurch lassen sich beide Komponenten besonders einfach in die Fluidverbindung integrieren.

Vorzugsweise ist der Regenerator von der Niedertemperaturkammer aus gesehen vor dem Wärmetauscher in der Fluidverbindung angeordnet. Dadurch ist der als Wärme- und Kältespeicher fungierende Regenerator besonders effektiv, da dieser während der ersten Hubbewegung des Kolbens von dem kalten Fluid aus der Niedertemperaturkammer durchströmt und somit im Wesentlichen auf die Temperatur des kalten Fluids abgekühlt wird. Außerdem kann der Regenerator dann das während der zweiten Hubbewegung des Kolbens aus der Hochtemperaturkammer wieder zurück in die Niedertemperaturkammer strömende wärmere Fluid stärker abkühlen.

Nach einer bevorzugten Weiterbildung der Erfindung weist der Fluidauslass ein Einwegventil auf, welches lediglich in Auslassrichtung durchströmbar ist. Dadurch wird ein Entweichen des Fluids in den Fluidauslass und damit in den Behälter möglich, wenn der Druck in der Hochtemperaturkammer den Behälterdruck übersteigt. Andererseits kann das Fluid nicht aus dem Behälter in die Hochtemperaturkammer strömen.

Besonders bevorzugt ist der Fluidauslass in Auslassrichtung gesehen hinter dem Einwegventil durch eine insbesondere von einem oder dem Wärmetauscher gebildete Kühleinrichtung geführt. Dadurch kann das Fluid, welches das Einwegventil durchströmt hat, abgekühlt werden und so gegebenenfalls dessen Druck, der höher sein kann als der Behälterdruck, an den Behälterdruck angepasst werden.

Insbesondere kann ein Teil des Fluidauslasses von einem Sekundärzweig des Wärmetauschers gebildet sein, durch dessen Primärzweig die Fluidverbindung zwischen der Hochtemperaturkammer und der Niedertemperaturkammer geführt ist. Dadurch kann das Fluid, welches in gedrosselter Expansion in den Behälter strömt, Wärme an das den Primärzweig während der ersten Hubbewegung durchströmende kalte Fluid abgeben. Somit wird es möglich, das von der Niedertemperaturkammer in die Hochtemperaturkammer geförderte kalte Fluid mittels des über den Fluidauslass in den Behälter strömenden Fluids zu erwärmen, während das in den Behälter strömende Fluid gekühlt wird. Damit lässt sich die Pumpe besonders effektiv betreiben und externe, bspw. elektrisch betriebene Kälte-und/oder Wärmequellen müssen nicht oder nur in geringem Maße eingesetzt werden.

Vorzugsweise weist der Fluideinlass ein Ventil auf, welches in Einlassrichtung durchströmbar ist. Bei dem Ventil handelt es sich insbesondere um ein Einwegventil oder um ein steuerbares Ventil, wie etwa ein Magnetventil, welches mittels einer Ventilsteuerung ansteuerbar ist. Dadurch kann einerseits erreicht werden, dass Fluid aus dem Tank in die Niedertemperaturkammer strömen kann, wenn der Druck in der Niedertemperaturkammer unter dem Tankdruck liegt. Andererseits kann verhindert werden, dass Fluid in den Tank entweicht.

Nach einer Weiterbildung der Erfindung ist ein mechanischer oder pneumatischer oder elektromagnetischer Kolben-Antrieb für den Kolben vorgesehen. Besonders bevorzugt ist der Kolben-Antrieb mechanisch vom Kolben entkoppelt, sodass der Kolben besonders gut von der Umgebung thermisch entkoppelt werden kann.

Vorzugsweise ist der Kolben zumindest teilweise magnetisch ausgebildet, wobei der Kolben-Antrieb zwei Ringspulen aufweist. Dabei umschließt eine Ringspule das eine Ende und die andere Ringspule das andere Ende des Zylinders. Ferner weist der Kolben-Antrieb eine Steuerung für die Ringspulen auf, die dazu ausgebildet ist, die Ringspulen derart zu bestromen, dass im Zylinder Magnetfelder generiert werden, welche den Kolben wahlweise in die eine oder die andere Hubrichtung treiben. Dadurch kann ein einfacher, vom Kolben mechanisch entkoppelter Kolben-Antrieb realisiert werden, so dass sich die Zylinder-Kolben-Anordnung thermisch gut gegen die Umgebung isolieren lässt.

Bevorzugt münden der Einlass sowie ein Ende der Fluidverbindung in die Grundseite der Niedertemperaturkammer und der Auslass sowie das andere Ende der Fluidverbindung münden in die Grundseite der Hochtemperaturkammer.

Nach einer bevorzugten Ausgestaltung der Erfindung ist die Pumpe innerhalb des Tanks angeordnet. Dadurch kann die kryogene Pumpe auf einfache Weise von der Umgebung thermisch entkoppelt werden.

Die erfindungsgemäße Pumpe eignet sich insbesondere zum Fördern eines kryogenen Fluids aus einem Niederdrucktank in einen unter höherem Druck stehenden Pufferspeicher, der beispielsweise ein Teil eines Gemischbildungssystems eines Antriebsaggregates ist, welches das kryogene Fluid als Kraftstoff verwendet. Bei einem derartigen Antriebsaggregat kann es sich beispielsweise um einen Verbrennungsmotor, eine Gasturbine oder ein Strahltriebwerk handeln.

Vorteilhaft an der erfindungsgemäßen Pumpe ist, dass diese nicht nur zum Fördern des Kraftstoffes in Richtung des der Pumpe nachgeschalteten Antriebsaggregates eingesetzt werden kann, sondern auch den Druck des kryogenen Fluids erhöht. Dabei können mit der erfindungsgemäßen Pumpe beispielsweise die für unter äußerer Gemischbildung arbeitenden Verbrennungsmotoren erforderlichen Drücke von etwa 0,2 bis 0,5 MPa erreicht werden. Mit der erfindungsgemäßen Pumpe können auch Drücke von etwa 1,0 bis 2,0 MPa erreicht werden, die für einen Verbrennungsmotor erforderlich sind, der bei einer sogenannten inneren Gemischbildung mit frühem Injektionsbeginn zu Beginn des Verdichtungshubs arbeitet. Außerdem können die erforderlichen Drücke von etwa 10 bis 20 MPa für Verbrennungsmotoren erreicht werden, die mit Kraftstoffinjektion bei spätem, beispielsweise etwa 5° vor dem oberen Totpunkt liegenden Injektionsbeginn arbeiten. Auch die für Strahltriebwerke in der Luftfahrt oder Raumfahrt notwendigen Injektionsdrücke für die Brennkammern der Strahltriebwerke, welche im Bereich von etwa 3,0 bis 5,0 MPa liegen, können mit der erfindungsgemäßen Pumpe erreicht werden.

Der Durchmesser des Kolbens der Pumpe kann beispielsweise im Bereich zwischen 12 bis 20 mm liegen, so dass insgesamt eine sehr kompakte Pumpe mit einer relativ geringen Förderrate von etwa 1 bis 10 Gramm pro Sekunde an flüssigem Wasserstoff realisiert werden kann, die sich insbesondere für den Einsatz in Kraftfahrzeugen mit Wasserstoffantrieb eignet, insbesondere in Personkraftfahrzeugen, aber auch in Lastkraftwagen.

Ein Ausführungsbeispiel der Erfindung wird nachfolgend anhand der beigefügten Zeichnung beschrieben.

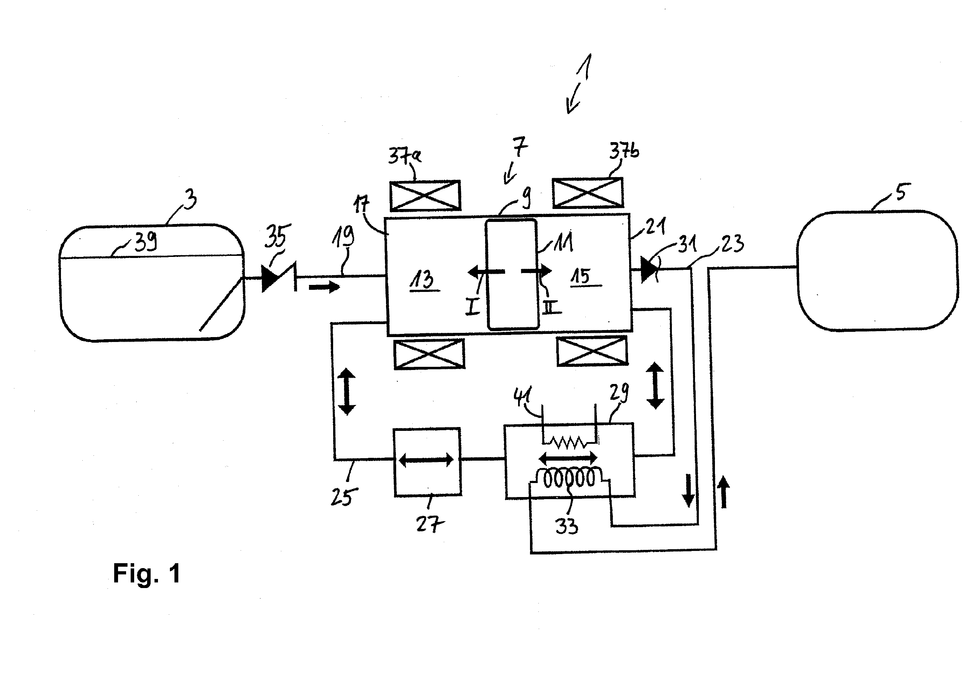

- Fig. 1: zeigt schematisch ein Blockdiagramm eines Kraftstoffsystems.

Das dargestellte Kraftstoffsystem 1 umfasst einen Niederdrucktank 3 für kryogenen Wasserstoff, einen Pufferspeicher 5 für den kryogenen Wasserstoff und eine Pumpe 7 zum Fördern des kryogenen Wasserstoffs von dem Tank 3 in den Pufferspeicher 5. Die Pumpe 7 weist einen Zylinder 9 auf, in dem ein Kolben 11 angeordnet ist, der im Zylinder 9 in Richtung der Zylinderlängsachse hin- und her verlaufende Hubbewegungen ausführen kann.

Der Kolben 11 unterteilt das Zylinderinnere in eine Niedertemperaturkammer 13 und in eine Hochtemperaturkammer 15. Wie aus Fig. 1 ersichtlich ist, nimmt das Volumen der Niedertemperaturkammer 13 bei einer in einer Hubrichtung I verlaufenden ersten Hubbewegung des Kolbens 11 ab, wohingegen das Volumen der Hochtemperaturkammer 15 zunimmt. Umgekehrt nimmt bei einer in der entgegengesetzten Hubrichtung II verlaufenden zweiten Hubbewegung des Kolbens 11 das Volumen der Hochtemperaturkammer 15 ab, wohingegen das Volumen der Niedertemperaturkammer 13 entsprechend zunimmt, sodass das Gesamtvolumen der Niedertemperaturkammer 13 und der Hochtemperaturkammer 15 gleich bleibt.

Wie ferner aus Fig. 1 ersichtlich ist, mündet in die die Niedertemperaturkammer 13 begrenzende Grundseite 17 des Zylinders 9 ein Fluideinlass 19, an den der Tank 3 angeschlossen ist. Außerdem ist aus der die Hochtemperaturkammer 15 begrenzenden Grundseite 21 des Zylinders 9 ein Fluidauslass 23 geführt, an den der Behälter 5 angeschlossen ist. Zudem verläuft eine Fluidleitung 25 zwischen der Niedertemperaturkammer 13 und der Hochtemperaturkammer 15, deren einen Ende in die Grundseite 17 und deren anderes Ende in die Grundseite 21 mündet.

Die Fluidverbindung 25 ist ausgehend von der Niedertemperaturkammer 13 durch einen Regenerator 27 und anschließend durch einen Wärmetauscher 29 geführt. Dabei bilden der Regenerator 27 sowie ein Primärzweig (nicht dargestellt) des Wärmetauschers 29 jeweils einen Teil der Fluidverbindung 25.

Der Fluidauslass 23 weist ein Einwegventil 31 auf und verläuft in Auslassrichtung gesehen hinter dem Einwegventil 31 durch einen Sekundärzweig 33 des Wärmetauschers 29, sodass der Sekundärzweig 33 einen Teil des Fluidauslasses 23 bildet. Der Fluidauslass 23 mündet in Auslassrichtung gesehen hinter dem Sekundärzweig 33 in den Pufferspeicher 5.

Bei dem Primärzweig und dem Sekundärzweig 33 des Wärmetauschers 29 handelt es sich um jeweils eine Fluidleitung, die thermisch miteinander gekoppelt sind, so dass ein Austausch von Wärmeenergie zwischen dem im Sekundärzweig 33 strömenden Fluid und dem im Primärzweig strömenden Fluid erfolgen kann.

Der Fluideinlass 19 weist ein Ventil 35 auf, welches in Einlassrichtung, also vom Niederdrucktank 3 in Richtung der Niedertemperaturkammer 13 durchströmbar ist. Bei dem Ventil 35 kann es sich insbesondere auch um ein Einwegventil oder um ein über eine Steuerung (nicht gezeigt) ansteuerbares Magnetventil handeln.

Nach der dargestellten Ausführungsform ist ein elektromagnetischer Antrieb für den Kolben 11 vorgesehen. Der Antrieb umfasst zwei Ringspulen 37a, 37b, wobei jeweils eine Ringspule 37a, 37b ein Ende des Zylinders 9 umschließt. Die Ringspulen 37a, 37b können von einer nicht dargestellten Steuereinrichtung derart mit elektrischem Strom beaufschlagt werden, dass diese innerhalb des Zylinders 9 Magnetfelder generieren, die den zumindest teilweise magnetisch ausgebildeten Kolben 11 wahlweise in die eine oder die andere Hubrichtung I, II treiben.

Der Niederdrucktank 3 ist bis zu einem beispielhaft eingezeichneten Niveau 39 mit kryogenem Wasserstoff gefüllt. Die Temperatur des kryogenen Wasserstoffs kann beispielsweise etwa 23 Kelvin betragen. Außerdem kann der Druck im Niederdrucktank 3 etwa 0,2 MPa betragen. Der Druck sowie auch die Temperatur können demgegenüber im Pufferspeicher 5 höher sein. Beispielsweise kann dort die Temperatur des kryogenen Wasserstoffs etwa 35 Kelvin und der Druck kann etwa 2 MPa betragen. Nachfolgend wird die Funktionsweise der Pumpe 7 bzw. des Kraftstoffsystems 1 anhand eines Pumpzyklus beschrieben. Dabei führt der Kolben 11 zunächst eine in der einen Hubrichtung I verlaufende erste Hubbewegung aus. Der Kolben 11 bewegt sich von der Grundseite 21 zur Grundseite 13, so dass sich das Volumen der Hochtemperaturkammer 15 vergrößert und das Volumen der Niedertemperaturkammer 13 entsprechend verkleinert. Der in der Niedertemperaturkammer 13 enthaltene kryogene Wasserstoff wird dabei durch die Fluidverbindung 25 in die Hochtemperaturkammer 15 gedrückt. Dabei wird der kalte Wasserstoff im Regenerator 27 unter Abkühlung des Regenerators 27 erwärmt. Außerdem wird der Wasserstoff im Primärzweig des Wärmetauschers 29 auf eine oberhalb der Temperatur des Pufferspeichers liegende Temperatur TW erwärmt.

Dazu umfasst der Wärmetauscher 29 eine elektrische Heizung 41, die bspw. eine Heizwendel umfasst, welche um den Primärzweig gewickelt ist. Außerdem erfolgt eine Erwärmung des durch den Primärzweig strömenden Wasserstoffs anhand des Sekundärzweigs. Aus der Erwärmung des kryogenen Wasserstoffs resultiert eine insbesondere isochore Druckerhöhung des Fluids in der Hochtemperaturkammer 15, wobei nach Erreichen des Druckniveaus des Pufferspeichers 5 der Wasserstoff über das Ventil 31 in gedrosselter Expansion über den Fluidauslass 23 und den Sekundärzweig 33 in den Pufferspeicher 5 strömen kann.

Bei der in der entgegengesetzten Hubrichtung II verlaufenden zweiten Hubbewegung des Kolbens 11 bewegt sich der Kolben 11 von der Grundseite 17 zur Grundseite 21. Dabei nimmt das Volumen der Niedertemperaturkammer 13 zu, während dasjenige der Hochtemperaturkammer 15 abnimmt. Der in der Hochtemperaturkammer 15 verbliebene Wasserstoff strömt über die Fluidverbindung 25 und damit durch den Primärzweig des Wärmetauschers 29, wobei keine Wärme aufgenommen oder abgegeben wird, da der Wärmetauscher 29 aufgrund der ersten Hubbewegung im wesentlichen dieselbe Temperatur TW wie das von der Hochtemperaturkammer 15 zurückströmende Fluid aufweist. Anschließend strömt das Fluid durch den von der vorhergehenden Kolbenphase her kalten Regenerator 27, so dass der Wasserstoff durch den Regenerator 27 abgekühlt wird. Dadurch sinkt der Druck in der Niedertemperaturkammer 13 unterhalb des Tankstoffdrucks, so dass weiterer Wasserstoff aus dem Tank 3 in die Niedertemperaturkammer 13 strömen kann. Sobald der Kolben 11 die Grundseite 21 erreicht hat, endet der Pumpzyklus und ein neuer Zyklus zum Fördern des Wasserstoffs vom Niederdrucktank 3 zum Pufferspeicher 5 kann - entsprechend der vorstehenden Beschreibung - beginnen.

Bei der beschriebenen Ausführungsform ist vorteilhaft, dass die serielle Anordnung des Regenerators 27 und des Wärmetauschers 29 in der Fluidverbindung 25 einerseits eine isochore Erwärmung mit entsprechendem Druckaufbau des von der Niedertemperaturkammer 13 in die Hochtemperaturkammer 15 geförderten kryogenen Wasserstoffs bewirkt. Der in der Hochtemperaturkammer 15 verbliebene Rest des kryogenen Wasserstoffs, welcher nicht durch das Ventil 31 in den Pufferspeicher 5 geströmt ist, wird unter Druckabnahme im Regenerator 27 regenerativ abkühlt und anschließend mit dem aus dem Niederdrucktank 3 nachströmenden Wasserstoff aufgewärmt und im Wärmetauscher 29 unter Verwendung der bei isenthalper Drosselung des in den Pufferspeicher 5 strömenden, insbesondere überkritischen Wasserstoffs freigewordenen Wärme wieder auf die Temperatur TW gebracht wird.

### Bezugszeichenliste

- 1: Kraftstoffsystem
- 3: Niederdrucktank
- 5: Pufferspeicher
- 7: Pumpe
- 9: Zylinder
- 11: Kolben
- 13: Niedertemperaturkammer
- 15: Hochtemperaturkammer
- 17: Grundseite von 9
- 19: Fluideinlass
- 21: Grundseite von 9
- 23: Fluidauslass
- 25: Fluidverbindung
- 27: Regenerator
- 29: Wärmetauscher
- 31: Einwegventil
- 33: Sekundärzweig von 29
- 35: Ventil
- 37a: Ringspule
- 37b: Ringspule
- 39: Fluidniveau
- 41: Heizung

## Patentansprüche

1. Pumpe zum Fördern eines kryogenen Fluids, wie etwa kyrogenem Wasserstoff, von einem Tank (3) in einen unter einem höheren Druck stehenden Behälter (5), umfassend einen Zylinder (9) mit einem darin angeordneten Kolben (11), welcher im Zylinder (9) hin-und her verlaufende Hubbewegungen auszuführen kann, wobei das Volumen einer Niedertemperaturkammer (13) des Zylinders (9) bei einer in einer Hubrichtung (I) verlaufenden ersten Hubbewegung des Kolbens (11) abnimmt und das Volumen einer Hochtemperaturkammer (15) des Zylinders (9), die auf der zur Niedertemperaturkammer (13) gegenüberliegenden Seite des Kolbens (11) liegt, entsprechend zunimmt, wobei umgekehrt bei einer in der entgegengesetzten Hubrichtung (II) verlaufenden zweiten Hubbewegung des Kolbens (11) das Volumen der Hochtemperaturkammer (15) abnimmt und das Volumen der Niedertemperaturkammer (13) entsprechend zunimmt,
einen in die Niedertemperaturkammer (13) mündenden Fluideinlass (19), an den der Tank (3) angeschlossen oder anschließbar ist, einen aus der Hochtemperaturkammer (15) führenden Fluidauslass (23), an den der Behälter (5) angeschlossen oder anschließbar ist, und eine Fluidverbindung (25), über die die beiden Kammern (13, 15) miteinander verbunden sind, **dadurch gekennzeichnet, dass**
zumindest eine Heizeinrichtung (27, 29) dazu ausgebildet ist, das während der ersten Hubbewegung aus der Niedertemperaturkammer (13) durch die Fluidverbindung (25) in die Hochtemperaturkammer (15) strömende Fluid derart zu erwärmen, dass sich in der Hochtemperaturkammer (15) ein, insbesondere isochor, mit der Temperatur ansteigender Druck einstellt, welcher den Behälterdruck übersteigt.

2. Pumpe nach Anspruch 1,
**dadurch gekennzeichnet, dass**
zumindest eine Kühleinrichtung (27) dazu ausgebildet ist, das in der Hochtemperaturkammer (15) verbliebene, nicht über den Fluidauslass (23) abgeströmte Fluid, welches während der zweiten Hubbewegung aus der Hochtemperaturkammer (15) über die Fluidverbindung (25) zurück in die Niedertemperaturkammer (13) strömt, derart zu kühlen, dass sich in der Niedertemperaturkammer (13) ein, insbesondere isochor, mit der Temperatur abnehmender Druck einstellt, der niedriger ist als der Tankdruck.

3. Pumpe nach Anspruch 2,
**dadurch gekennzeichnet, dass**
die Fluidverbindung (25) durch die zumindest eine Heizeinrichtung (27, 29) und/oder die zumindest eine Kühleinrichtung (27) geführt ist.

4. Pumpe nach zumindest einem der vorhergehenden Ansprüche,
**dadurch gekennzeichnet, dass**
die zumindest eine Heizeinrichtung einen Wärmetauscher (29) aufweist, durch den die Fluidverbindung (25) geführt ist, wobei vorzugsweise ein Primärzweig des Wärmetauschers (29) einen Teil der Fluidverbindung (25) bildet.

5. Pumpe nach zumindest einem der vorhergehenden Ansprüche,
**dadurch gekennzeichnet, dass**
die zumindest eine Heizeinrichtung einen Regenerator (27) aufweist, durch den die Fluidverbindung (25) geführt ist, wobei der Regenerator (27) auch als Kühleinrichtung für das aus der Hochtemperaturkammer (15) während der zweiten Hubbewegung über die Fluidverbindung (25) zurück in die Niedertemperaturkammer (13) strömende Fluid vorgesehen ist.

6. Pumpe nach den Ansprüchen 4 und 5,
**dadurch gekennzeichnet, dass**
der Regenerator (27) und der Wärmetauscher (29) seriell in der Fluidverbindung (25) angeordnet sind, wobei der Regenerator (27) von der Niedertemperaturkammer (13) aus gesehen vorzugsweise vor dem Wärmetauscher (29) in der Fluidverbindung (25) angeordnet ist.

7. Pumpe nach zumindest einem der vorhergehenden Ansprüche,
**dadurch gekennzeichnet, dass**
der Fluidauslass (23) ein Einwegventil (31) aufweist, welches in Auslassrichtung durchströmbar ist.

8. Pumpe nach Anspruch 7,
**dadurch gekennzeichnet, dass**
der Fluidauslass (23) in Auslassrichtung gesehen hinter dem Einwegventil (31) durch eine insbesondere von einem oder dem Wärmetauscher (29) gebildete Kühleinrichtung geführt ist.

9. Pumpe nach Anspruch 8,
**dadurch gekennzeichnet, dass**
ein Teil des Fluidauslasses (23) von einem Sekundärzweig (33) des Wärmetauschers (29) gebildet ist, durch dessen Primärzweig die Fluidverbindung (25) zwischen der Niedertemperaturkammer (13) und der Hochtemperaturkammer (15) geführt ist.

10. Pumpe nach zumindest einem der vorhergehenden Ansprüche,
**dadurch gekennzeichnet, dass**
der Fluideinlass (19) ein Ventil (35) aufweist, welches in Einlassrichtung durchströmbar ist, wobei es sich bei dem Ventil (35) insbesondere um ein Einwegventil handelt.

11. Pumpe nach zumindest einem der vorhergehenden Ansprüche,
**dadurch gekennzeichnet, dass**
ein mechanischer oder pneumatischer oder elektromagnetischer Kolben-Antrieb für den Kolben (11) vorgesehen ist, insbesondere ein Kolben-Antrieb, welcher mechanisch vom Kolben (11) entkoppelt ist.

12. Pumpe nach Anspruch 11,
**dadurch gekennzeichnet,**
**dass** der Kolben zumindest teilweise magnetisch ausgebildet ist, dass der Kolben-Antrieb zwei Ringspulen (37a, 37b) aufweist, wobei eine Ringspule (37a) ein erstes Ende und die andere Ringspule (37b) ein zweites Ende des Zylinders (9) umschließt, und dass der Kolben-Antrieb eine Steuerung für die Ringspulen (37a, 37b) aufweist, welche dazu ausgebildet ist, die Ringspulen (37a, 37b) derart zu bestromen, dass im Zylinder (9) Magnetfelder generiert werden, welche den Kolben (11) wahlweise in die eine oder die andere Hubrichtung (I, II) treiben.

13. Pumpe nach zumindest einem der vorhergehenden Ansprüche,
**dadurch gekennzeichnet, dass**
die Pumpe (7) innerhalb des Tanks (3) angeordnet ist.
